# EUROPEAN PATENT SPECIFICATION

(11) **EP 1 365 603 B1**
(45) Date of publication and mention of the grant of the patent: **09.10.2013**
(21) Application number: 02702418.1
(22) Date of filing: 26.02.2002
(51) Int. Cl.: H04M 1/725, H04W 4/14, H04W 4/18, H04W 88/18

(54) **SYSTEM FOR TRANSMITTING/RECEIVING SHORT MESSAGES (SMS) BETWEEN MOBILE TERMINALS AND REMOTE SERVERS**
SYSTEM ZUM SENDEN/EMPFANGEN KURZER NACHRICHTEN (SMS) ZWISCHEN MOBILEN ENDGERÄTEN UND ABGESETZTEN SERVERN
SYSTEME D'EMISSION/RECEPTION DE MESSAGES COURTS (SMS) ENTRE DES TERMINAUX MOBILES ET DES SERVEURS DISTANTS

(30) Priority: 27.02.2001 ES 200100468
(43) Date of publication of application: 26.11.2003
(73) Proprietor: Vodafone Group PLC, Newbury Berkshire RG14 2FN (GB)
(72) Inventor: CONTRERAS ALVAREZ, Francisco, E-28022 Madrid (ES); BUSTILLO VELASCO, Jaime, E-28109 Alcobendas (ES); BORRERO ORTIZ, Santiago, E-28028 Madrid (ES)
(74) Representative: Keston, David Arthur
(86) International application number: PCT/ES2002/000081
(87) International publication number: WO 2002/069651

(56) References cited:
- EP-A2- 0 910 223
- WO-A2-98/34422
- WO-A2-99/53699

## Description

### OBJECT OF THE INVENTION

The object of the invention in question is to provide a system of bi-directional communication of short messages between mobile terminals and remote servers, and all this such that the users of the mobile terminals need not introduce the short messages to be sent in a direct way, but rather they are introduced starting from a direct interpretation format, which is translated into the format of short messages, and inversely, that is, the received short messages are translated to direct interpretation format; all this such that the introduction of short messages is carried out in a simple way and the interpretation of the received short messages is carried out in an immediate way.

The invention is preferably applicable in those cases in which it is required to set up a bi-directional communication by means of short messages between a remote server, as for example can be a server of a company or corporate entity, with its own or contracted personnel displaced outside the premises of the company, so that the communication is facilitated between the displaced personnel or contracted persons with the remote server.

### BACKGROUND OF THE INVENTION

The sending of short messages between users of mobile telephony is greatly employed at the present time, for which said users communicate with a short message service centre (SMSC) through a GSM (Global System for Mobile) mobile telephony network, UMTS (Universal Mobile Telecommunications System), GPRS (General Packet Radio Service), etc.

With respect to the mobile terminals, these basically are constituted by the user terminal itself which includes the keypad, screen, antenna, etc.; and the mobile terminals also include a mobile telephone smart card SIM (Subscriber Identity Module) which is used when the network is GSM, or a smart card USIM (UMTS communications network mobile telephone card).

Given the importance of the added value of short messages, these are being progressively introduced in a greater measure, but their direct use requires the user to write the information exactly as the addressee (person or machine) has to receive it with some criteria which can be very strict in the case where the message is directed to a machine, as may be a remote server. This produces frequent errors in the communications made which lead to inefficiency and serious economic losses, by the composition of complex messages having to be carried out manually by people that in most cases may lack computer literacy, such as is the case in which a corporate entity needs to communicate with its own or contracted personnel displaced outside the premises of the corporate entity.

This problem is aggravated when the transmitted information is bi-directional, that is, when the person carrying the mobile terminal receives information from a remote server, to which he should respond with a very specific confirmation, and vice versa.

Moreover the use of short messages in a direct way requires that the servers to which the communication is addressed have to implement a new software to recognize the reduced format of short messages.

For all these reasons, a system does not exist in which bi-directional communication can be carried out between a mobile terminal and a remote server by means of short messages.

To achieve this bi-directional communication, company management systems are known at the present time based on web pages accessible through Internet or an Extranet which allow their employees or contractors to update *a posteriori* the status of the jobs undertaken when these take place outside the premises of the company itself, the necessary management information not being available in this way in real time through the appropriate communication means for this type of personnel not being available or being very complex.

WO98/34422 describes a method for operating bi-directional communication between a core network component (BMI) and a mobile terminal - the method takes account of the transfer format of the messages to determine whether the mobile terminal is capable of handling the message contents in an enhanced manner, otherwise delivering the message in a default manner.

### DESCRIPTION OF THE INVENTION

To resolve and achieve the aforementioned objectives, the invention has developed a new system which allows the sending of short messages to be carried out between a remote server, as for example may be a company or corporate entity, and a mobile terminal, so that the company or contracted personnel displaced outside the premises of the company can carry out bi-directional communications with the remote server through a mobile terminal, and all this without the need to have to introduce the short messages directly in the mobile terminal, their use being simplified and errors in the communications made being avoided.

The system of the invention is based on the conventionally well-known mobile terminals which basically comprise a user terminal and a mobile telephone smart card (SIM, USIM), and communicate with a short message service centre (SMSC) through a mobile telephony network (GSM, UMTS, GPRS) which in turn communicates with remote servers as may be a company or corporate entity.

For this, the invention is characterised in that the mobile terminals comprise first translating means for translating the short messages (SMS) received into a direct interpretation format, and with displaying means for displaying the direct interpretation format so that the user interprets in an immediate way the received SMS.

The mobile terminals are also endowed with displaying means for displaying at least a message in direct interpretation format, selecting means for selecting at least the displayed message and second translating means for translating at least the selected message in direct format into an SMS message, so these characteristics allow the user of the terminal to introduce and send short messages in an accessible and immediate way without having to introduce the short messages manually in a direct way, errors in the communication being avoided.

The direct interpretation formats have been previously established and stored in a database.

The first translating means for translating the short messages into a direct interpretation format are constituted by an analysis module which is endowed with means of detecting the validity and nature of the message (it can be a message of acceptance or rejection of some transaction sent previously to the remote server of the corporate system, or a new transaction received from the corresponding corporate system).

Also the first translating means for translating short messages into a direct interpretation format comprise a transaction managing module which receives the result of the analysis performed, processes it and accesses the database from which the translation is carried out into direct interpretation format. To make the communication with the user, a user interface module of the mobile terminal has been foreseen, from which the direct interpretation format is shown to the user of the mobile terminal.

The first displaying means for displaying the direct interpretation format as well as the second displaying means for displaying at least a message of direct interpretation, are determined by the screen of the mobile terminal, which is connected to the transaction managing module through the user interface.

The selecting means for selecting at least the message in direct interpretation format is determined by the keyboard of the mobile terminal, the user interface, and by the transaction managing module.

With respect to the second translating means for translating the messages in direct interpretation format into SMS, these are constituted by the transaction managing module itself which accesses the database and delivers the different data to an SMS composition module from which they are transmitted to the SMSC.

Under normal conditions of operation, a plurality of messages in direct interpretation format has been foreseen among which at least one is selected, by means of the keyboard, so that starting from this the SMS is composed, and is sent to the SMSC. Clearly this plurality of messages in direct interpretation format has been previously established and stored in the database.

There is the possibility that at least two messages in direct interpretation format be selected sequentially, in order to compose the SMS from them and send the SMS to the SMSC.

In an embodiment of the invention the means previously described are foreseen in the user terminal, but clearly, and according to another example of embodiment of the invention, these means can be included in the mobile telephone smart card (SIM, USIM).

To allow communication to be set up between the SMSC and the remote servers, a transaction server has been foreseen which communicates with the remote server and with the SMSC, over a communications line.

In the preferred embodiment of the invention, the communications line is Internet, but clearly it can be any other type of line, like a cable for example.

There is also the possibility that the transaction server is foreseen in the SMSC itself and therefore the communications line is not required.

Clearly the transaction server has a particular architecture, which comprises means of conversion of SMS messages, provided by the SMSC, into a format in accordance with the communications protocol established on the communications line, also comprising means of conversion from the format in accordance with the communications protocol, established on the line, into SMS messages.

Both previously remarked means of conversion, are constituted by a message analysis module which is endowed with means of detecting the validity and nature of the message (it determines if its content is an acceptance or rejection of a transaction previously carried out or if it is a new transaction), a transaction managing module which accesses a database from which it carries out the translation into the SMS format by means of a message composition module.

Also the transaction server includes a communications managing module to allow communication with each remote server.

There is the possibility that different communications managing modules are included to allow communication with different remote servers. Therefore the case could arise wherein there is a communications managing module for each remote server.

Also the transaction server includes different transmitter/receiver means for communication with the remote servers. The case could also arise where a single transmitter/receiver means is included for communication with the remote servers.

Moreover the remote servers comprise receiver/transmitter means of the SMS equivalent in the communications protocol established on the communications line of each server.

Each communications managing module is connected to a database to verify some previously established security parameters and to reject or accept the communication as a function of the outcome of the verification.

Therefore, by means of the described system of the invention human errors are avoided, since the user of the mobile terminal only has to select, through an interface, the information (person-machine) it is desired to send, obtaining an optimum level of reliability.

Based on the description made, it is easily understood that the system of the invention can adapt to any corporate system, and is also applicable on any mobile telephony communications network.

Next, to facilitate a better understanding of this description and forming an integral part thereof, the same is accompanied with a series of figures in which, by way of illustration and not restrictively, the object of the invention has been represented.

### BRIEF DESCRIPTION OF THE FIGURES

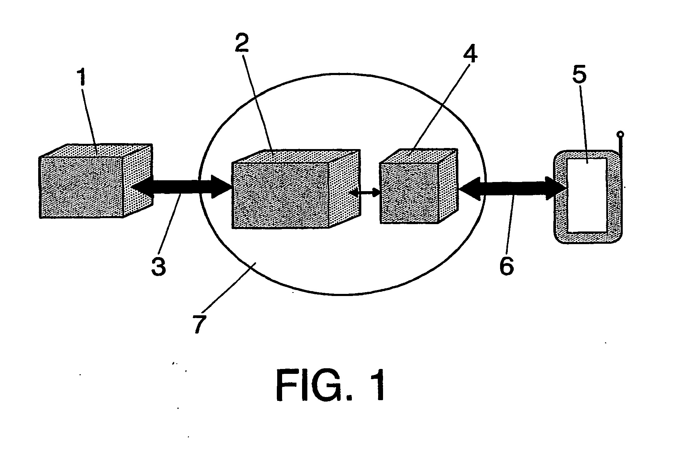

**Figure 1****.** - It shows a functional block diagram of the general structure of the system of the invention.
**Figure 2****.** - It shows an explanatory functional block diagram of the case in which the remote server (company or corporate entity) is the end that sends a short message to the user of the mobile terminal.
**Figure 3****.** - It shows an explanatory functional block diagram of the case in which the user of the mobile terminal is the one that sends a short message to the remote server.
**Figure 4****.** - It shows a functional block diagram of a possible example of embodiment of the mobile terminal.
**Figure 5****.** - It shows a functional block diagram of a possible example of embodiment of the transaction server that is part of the system of the invention to allow bi-directional communication of short messages to be set up between users of mobile terminals and remote servers.

### DESCRIPTION OF A PREFERRED EMBODIMENT

Next, a description of the invention based on the previously commented figures is provided hereinbelow.

The example that is provided of the invention relates to the case in which a remote server, belonging to a company or corporate entity, establishes bi-directional communication by means of short messages with a mobile terminal belonging to a worker of the company or a contracted person, and which is displaced outside the premises of the company.

For this, the remote server or corporate server 1 is connected with a transaction server 2 over a communications line 3.

In turn the transaction server is connected with a short message service centre (SMSC) 4 which communicates through the mobile telephony network 6 with a mobile terminal 5.

The transaction server 2, as well as the SMSC 4, belongs to the mobile operator 7, so that the transaction server 2 is adapted to the communications protocol established by the corporate server 1, as will be explained later, whereby it is not necessary to make modifications in the structure of the corporate server 1.

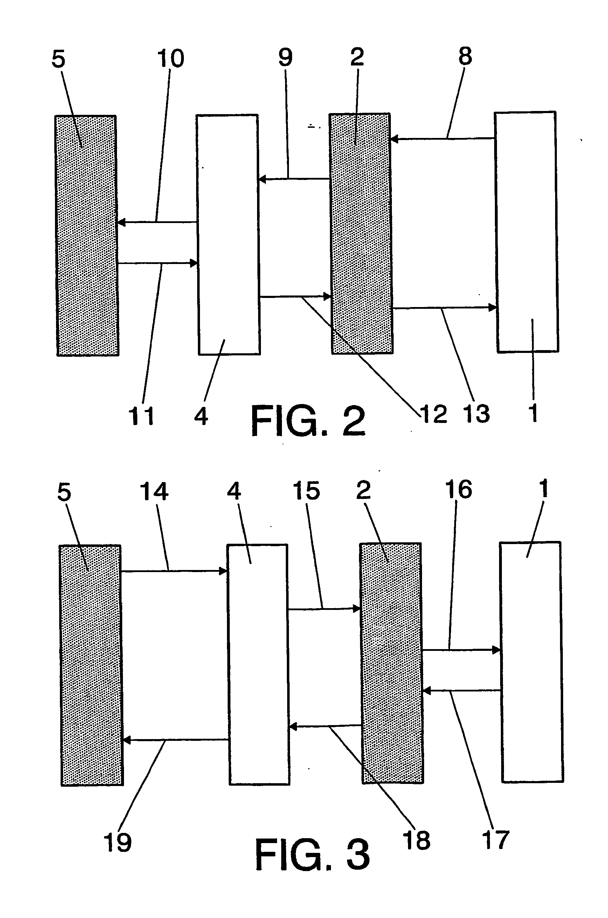

In figure 2 the different stages are shown which are followed to carry out the sending of a message from the corporate server 1 to the mobile terminal 5.

In the first place the corporate server 1 will obtain the data necessary to be able to compose a message which it is desired to send to the mobile terminal 5, and establishes a session with the transaction server to which a transaction request 8 is made.

Subsequently the transaction server 2 validates the request received and composes all the data for its delivery 9 in SMS format to the SMSC by the protocol which has been established between both elements. The transaction server 2 can be included in the SMSC 4 itself, or separated from the latter, in which case it is connected over a communications line, like for example Internet, cable, etc. Thus, the transaction server 2 maintains a session open both with the corporate server 1, and with the SMSC 4.

Next, the SMSC carries out the sending 10 of the SMS message in a conventional manner, by means of the public mobile communications network 6, to the mobile terminal 5 belonging to the displaced personnel.

When the short message is received in the mobile terminal, the latter processes it and generates a new message confirming reception in which the transaction received is accepted or rejected, and it is sent 11 through the mobile telephony network 6 to the SMSC which delivers the short message originated in the mobile terminal to the transaction server 2 in the communication protocol and on the method of connection set up between the two.

The transaction server 2 recognizes the message received as confirmation of receipt of a specific prior transaction, and analyses whether the transaction has been accepted or rejected, and adapts the response 13 to the corporate server in question, closing the session set up between the two.

With the help of figure 3, the different stages are described which take place when the short message is produced in the mobile terminal 5 and is sent to the corporate server 1.

In this case the necessary data are obtained in the mobile terminal 5 to be able to compose the desired message, as will be explained later, guided by menus, and the sending 14 of the short message (SMS) proceeds through the mobile telephony network 6.

Subsequently the SMSC carries out the sending 15 of the short message by means of the protocol and the connection set up with the transaction server 2, which analyses the message received and as a function of its destination sets up a connection 16 with the corporate server 1 according to the protocol and method of connection between the two.

Subsequently the corporate server 1 confirms reception of the transaction accepting it or rejecting it by means of a response 17 to the request 16.

Next, the transaction server generates a new short message to the SMSC and sends it 18. This message indicates thereto the outcome of the transaction.

Lastly the SMSC delivers 19 by sending a short message, through the mobile telephony network 6, confirmation of acceptance or rejection of the transaction.

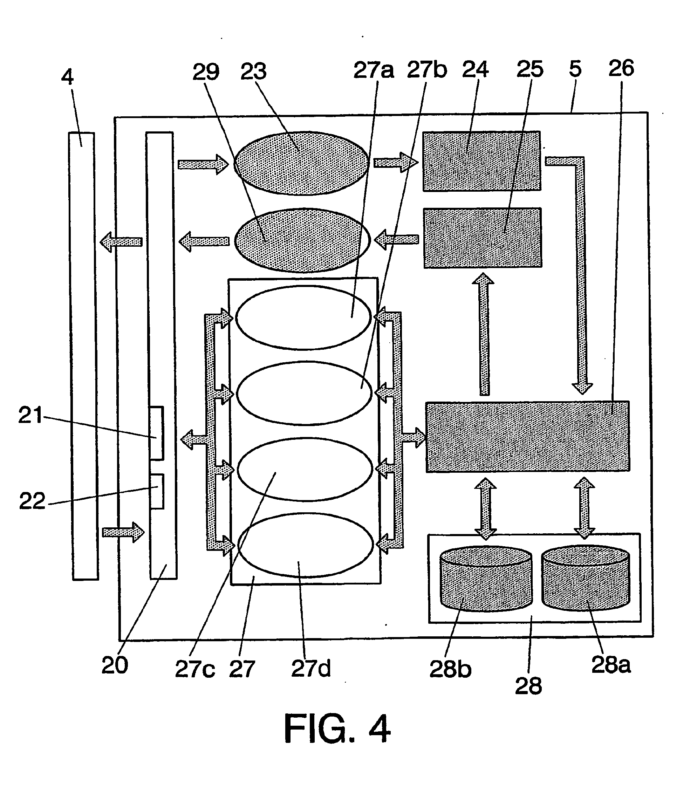

Having described the communication process generically in both directions, a detailed explanation of the operation of the mobile terminal is given below, the block diagram of which is shown in figure 4.

In the first place the process is described which is followed when the short message transaction is made from the corporate server 1 to the remote terminal 5.

In this case when the remote terminal 5 receives a new short message via the SMSC, the latter sends it to an SMS reception module 23 resident in the intelligent card (SIM or USIM). It could also reside in the user terminal 20 of the mobile terminal 5.

The SMS message reception module 23 delivers the received signals to a message analysis module 24 by means of which it is verified whether the received SMS message contains valid information for the system or not, so that in the event that it does not contain valid information, the message will be discarded.

If, on the contrary, the received message contains valid information for the system, it is analysed to discover what type of message it is; it possibly being a matter of an acceptance or rejection of some transaction previously sent to the corresponding corporate server, or of a new transaction received from the corresponding corporate server, such as was explained previously.

Once the message analysis module 24 has determined the coherence of the received message, as well as the type of message it is, it delivers this information to a transaction managing module 26 which serves to process the received information, so that if the received message is of acceptance of a previous transaction sent to the corporate server, the transaction managing module 26 communicates with a database 28, and more specifically with a transactions database 28a in which the transaction status is changed to the same status as that indicated in the received message of acceptance. The transactions database 28a includes the different transactions which can be received or sent by the user of the mobile terminal, for which reason these should have been previously stored. These transactions depend on the requirements of the corporate server 1.

If the received message is rejection of a transaction previously sent to the corresponding corporate server, the transaction managing module communicates with the transactions database 28a to change the transaction status to the last valid preceding status which it had stored before the sending of the transaction.

In the case in which the received message contains a transaction, the process followed in the transactions managing module 26 is the following:
a) If the received transaction is recorded in the transactions database 28a, the data that characterise the new transaction are not stored in the transactions database 28a, and the user is informed through an interface module 27, and more specifically through an events notification interface module 27a, and, next, a short message of rejection of the received transaction is sent. For this, the transaction managing module 26 communicates with a message composition module 25 providing the necessary data which are in the database 28, and more specifically in the transactions database 28a and in a configuration database 28b, so that the message composition module 25 can compose a message of rejection. Subsequently this message is supplied to an SMS transmission module 29 from which it is transmitted to the SMSC.
b) If the mobile terminal 5 has the capacity to be able to process a new transaction, the data that characterise the new transaction are stored in the transactions database 28a, after which the user is informed through the events notification interface 27a. Next, a short message of acceptance of the received transaction is sent. For this, the transaction managing module 26 communicates with the message composition module 25 to which it supplies the necessary data from the database 28 so that it can compose a message of acceptance. Subsequently this message is sent by means of the SMS transmission module 29.
c) If the transactions managing module 26 does not have the capacity to be able to process a new transaction, the data that characterise the new transaction are not stored in the transactions database 28a, after which the user is informed through the events notification interface module 27a. Next, a short message of rejection of the received transaction is sent, in the same way as was explained in the previous cases.

Next the process is described which the mobile terminal follows for the case in which the short message transaction is carried out from the mobile terminal 5 to the corporate server 1.

In this case the user, through the keyboard 22 and the screen 21 of the user terminal 20 accesses the interface 27, and more specifically a transaction sending interface 27b.

The transaction sending interface 27b requests the transaction managing module 26 to obtain the internal identifiers of each of the possible operations that can be carried out on any transaction present and stored previously in the transactions database 28a. These identifiers are presented to the user by the screen 21 in menu form, and through the transaction sending interface 27b. Subsequently the user selects one of said identifiers from the menu through the keyboard 22 and the transaction sending interface 27b informs the transaction managing module 26 of this in order to obtain the internal identifiers of each of the transactions present in the transactions database for the type of operation selected. These identifiers are likewise presented on the screen 21 by means of a menu and through the transaction sending interface, so that the user selects one of them by means of the keyboard 22, upon which the transaction sending interface 27b informs the transaction managing module 26 of this and, depending on the type of operation and transaction selected, the transaction sending interface will, on one hand, request the transaction managing module 26 to obtain the internal identifiers of any other information necessary for the type transaction sending which it is desired to carry out and which requires some selection on the part of the user, and on the other hand, it requests the terminal screen for any other additional information.

Therefore, the different possibilities of messages to be sent are shown on the screen to the user and the latter selects the different possibilities, so that after the user has selected and/or introduced all the necessary information, the transaction managing module 26 sends the message composition module 25 the data selected and/or introduced by the user, as well as some other data present in the configuration database 28b, so that the corresponding message can be generated. This message is delivered to the message transmission module SMS 29 which sends the SMS message obtained to the SMSC 4.

Clearly the user of the terminal can query the transactions which can be carried out and which were previously stored in the transactions database 28a, as already explained above.

For this, the user accesses the interface 27, and more specifically a transactions query interface 27c by means of the keyboard 22 and the screen 21, so that this interface 27c provides the user with specific menus which depend on the needs and functions required by the corporate server 1. Therefore, the data stored in the database 28a and 28b, depend on the requirements of the company or corporate server as was already pointed out.

To carry out the query, after accessing the transactions query interface 27c, the latter requests the transaction managing module 27 to obtain the internal identifiers of each of the transactions present in the transactions database 28a. These identifiers are presented to the user by means of the screen 21, through the transactions query interface 27c. From this point the user selects one of these indicators (presented by means of a menu, as was commented in the previous cases) through the keyboard 22, and the transactions query interface 27c informs the transaction managing module of this so that the latter, depending on the transaction selected, provides all the information related with said transaction for presentation on the screen.

The possibility also exists of configuring transactions, so that the user has the possibility of modifying certain information existing in the configuration database 28b, according to the requirements of his/her corporate server 1. For this the user, through the keyboard and screen of the terminal accesses the interface 27, and more specifically a configuration interface 27d, which requests the transaction managing module 26 to obtain the internal identifiers of each of the possible configuration operations which can be carried out on the configuration database 28b. These identifiers will be presented to the user through the configuration interface 27d, and when the user selects one of them, the interface informs the transaction managing module 26 of this.

Depending on the type of operation selected, the configuration interface 27d requests, on one hand, the transaction managing module 26 to obtain the internal identifiers of any other information necessary for the type of modification it is desired to carry out and which requires some selection on the part of the user, and on the other hand it requests the terminal screen for any other additional information.

After the user has selected and/or introduced all the information necessary, the transaction managing module 26 stores all the information in the configuration database 28b. Therefore, by means of the configuration interface the user is facilitated with the way to configure how to communicate with his/her corresponding corporate server.

The corporate server 1 is not described, since this can adopt any configuration deemed to be optimal and most effective according to the particular requirements of each company.

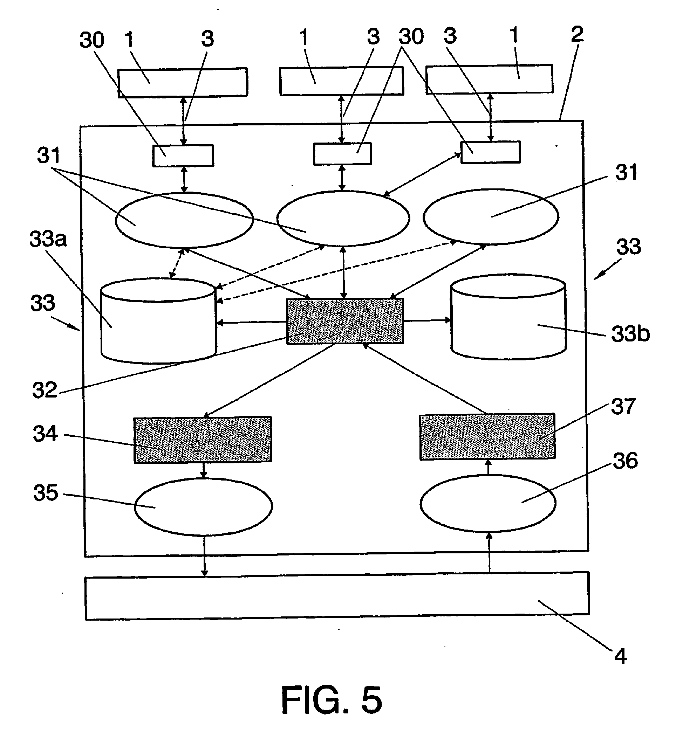

With respect to the transaction server 2, its block diagram is shown in figure 5, and its operation is described below according to the different possibilities which the system offers and which were described previously.

In the first place the case is described in which the corporate server sends a message to the mobile terminal; in which case said corporate server 1 establishes a session, in the protocol and through the communications network 3 that is determined, with a communications managing module 31 through a transmitter/receiver 30.

In the example of embodiment of figure 5 the possibility is envisaged of connecting a plurality of corporate servers 1 to the transaction server 2, for which reason the latter includes a transmitter/receiver module 30 and a communications managing module 31 for each of the corporate servers 1 to which it is connected.

At this point it is important to point out that this structure is necessary in the event that the corporate servers 1 use different communications protocols and networks. Therefore, it is obvious that corporate servers 1 which use the same communications line 7 and the same protocol will be connected to a same transmitter/receiver 30 and to a same communications managing module 31.

Consequently, the communications managing module 31, as well as the transmitter/receiver 30, can be specific for each company, or on the contrary they could be generic.

When the communications managing module 31 receives a session set-up request, as was described at the beginning of this section, it queries a database 33, and more specifically a security parameters configuration database 33a, on the security parameters established for each type of connection, so that as a function of the query carried out, it rejects or accepts the session set-up request.

When the session is accepted, the corporate server 1 sends the transaction which it wishes the mobile terminal to receive. This transaction is delivered by the communications managing module 31 to a transaction managing module 32 which verifies the format of the transaction according to the information available in the configuration database 33a, and if the format is not the appropriate one it returns an error message to the corporate server. It also obtains the rules of analysis and transformation from the configuration database 33a, which it has to apply to the received transaction to adapt them to the requirements of the applications of the mobile terminal to which the message is directed, and subsequently it enters a record of the data of the transaction in the database 33, and more specifically a transactions database 33b. Among the data which are recorded in this database a univocal reference is envisaged to the transaction which is being handled in order to allow ensuing processes like the confirmation of the delivery of said transaction.

Next, the transaction managing module 32 sends a message composition module 34 all the necessary data for the composition of the short message which it is desired to transmit.

Subsequently the message composition module takes all the data facilitated by the transaction managing module and composes the short message that is to be transmitted and sends it to a message transmission module 35 through which it is forwarded to the SMSC 4.

The message transmission module 35 serves to maintain a connection with the SMSC, in the protocol which is adopted and by means of a direct connection (in the case in which the transaction server forms part of the SMSC 4 itself) or by means of a communications line (in the event that the transaction server 2 is remote from the SMSC). The message transmission module also serves to administer the delivery of the short message to the SMSC, guaranteeing delivery of the message by means of an algorithm of reattempts which is established, or else it returns an error message if the delivery is not possible.

The process continues with the period of waiting for confirmation on the part of the application of the mobile terminal 5 of acceptance of the transaction. For this, a message reception module 36 has been foreseen which serves for being permanently connected in the protocol which is adopted by the direct connection or a communications line, to the SMSC 4, so that it will receive all the messages addressed to whichever of the corporate servers, and applies them to a message analysis module 37.

The message analysis module 37 determines in each message whether its content is an acceptance or rejection on the part of the mobile terminal, or concerns a new transaction, and is sent to the transaction managing module 32. In the event that the received message is an acceptance or rejection of a previous transaction, the transaction managing module 32 analyses the data of the acceptance or rejection message and obtains from the transactions database 33b the stored data relative to the transaction, and also obtains from the configuration database 33a the transformation rules which it must apply to answer the corporate server with the outcome of the transaction. Next it sends the response of the transaction to the communications managing module 31 which returns the outcome of the transaction to the corporate server and closes the session set up therewith, provided set-up of a standing session is not envisioned.

In the event that no message of acceptance or rejection is received in the message reception module 36, after a timeout established in the configuration database 33a, an error message is returned to the corporate server indicating this situation to it.

Next, the case is described in which it is the mobile terminal 5 that sends a transaction to the corporate server 1. In this case the message reception module is permanently connected, in the adopted protocol and by direct connection or over a communications line, with the SMSC, so that it receives all the messages addressed to any one of the corporate servers, applying these messages to the message analysis module 37 which determines whether their content is an acceptance or rejection of a transaction on the part of the application of the mobile terminal, or is a new transaction. The acceptance or rejection has already been described previously, and in the event that it is a transaction, this is sent to the transaction managing module 32 from the message analysis module 37, so that the former verifies the destination of the transaction and the format of the transaction according to the information available in the configuration database 33a. If the format is not the appropriate one, it returns a transaction rejection error message.

The transaction managing module 32 obtains from the configuration database 33a, the rules of analysis and transformation that it should apply to the received transaction to adapt them to the requirements of the corporate server.

Next, it makes a record of the data of the transaction in the transactions database 33b. Among the data which are recorded is a univocal reference to the transaction which is being handled to allow later processes like the confirmation of delivery thereof.

Subsequently the transaction managing module 32 sends the communications managing module 31, belonging to the corresponding corporate server 1, the necessary data for setting up a session with the corporate server 1, in the event that this is not permanent.

When the session has been set up, the communications managing module 31 sends the transaction, by means of the corresponding transmitter/receiver 30, to the corporate server, in accordance with the method that is established therein, so that data entry is being emulated in a form identical to that which is carried out for data entry by an habitual user of the corporate server.

Subsequently the communications managing module waits for the response of the corporate system and sends the transactions managing module the outcome thereof (acceptance, rejection of the transaction). In the event of a response not occurring, after a configurable timeout has elapsed, an error message is sent.

The transactions managing module analyses the response of the corporate server, and according to the rules established in the configuration database 33a for the specific corporate server, it sends the data necessary for the transmission of the outcome of the transaction to the message composition module, which formulates, according to the data obtained, the short message which has to be sent as confirmation of the transaction, and delivers it to the message transmission module, which serves to maintain a connection with the SMSC in the manner already commented.

## Claims

1. A system for transmitting/receiving short messages between a mobile terminal (5) and a remote server (1), in which the mobile terminal (5) at least comprises a user interface (20, 27), a mobile telephone smart card and said mobile terminal (5) is configured to communicate with a short message service centre (4) through a mobile telephony network (6), and said short message service centre is in turn configured to communicate with the remote server (1); **characterised in that** the mobile terminal (5) comprises:
translating means (23,24,26,28) for translating any received short messages into messages having a direct interpretation format;
displaying means for:
i) displaying the direct interpretation format of a received short message in order to allow a user to interpret the received short message;
ii) displaying at least one message option in the direct interpretation format;
selecting means (21,22) for selecting any of the displayed at least one message options;
the translating means (25,26,28,29) further configured for translating any selected message option from the direct interpretation format into a short message, thereby allowing a user of the terminal to introduce and send short messages in an accessible and immediate way.

2. A system according to claim 1, wherein the translating means (23,24,26,28) comprises:
a message analysis module (24) provided with means for detecting validity and nature of the received short message;
a transaction managing module (26) for receiving and analysing a result of said analysis module (24), and being configured to provide a translation of a valid received short message into the direct interpretation format.

3. A system according to claim 2, wherein the displaying means comprises a screen (21) of the mobile terminal (5), said screen being connected to the transaction managing module (26) through the user interface (20,27) to show the direct interpretation format on the screen (21).

4. A system according to any one preceding claim, wherein:
the translating means (25,26,28,29) further comprises a short message composing module (25) and a transaction managing module (26);
the selecting means comprises a keyboard (22) and a screen (21) such that the keyboard is configured to select at least one message option displayed on the screen and to have it reach said transaction managing module (26); and
the transaction managing module (26) is configured to access a database (28) and send data corresponding to the selected message option to the short message composing module (25).

5. A system according to claim 4, wherein:
the translating means (25,26,28,29) further comprises a short message transmitting module (29);
the short message composing module (25) is configured to compose the short message using the data sent from the transaction managing module (26), the short message being a translation of at least one selected message option in the direct interpretation format; and
the short message transmitting module (29) is configured to transmit the composed short message to the short message service centre (4).

6. A system according to any one preceding claim, wherein the translating means (24,25,26,28) is provided in the mobile telephone smart card.

7. A system according to any one preceding claim, wherein the short message transmitting module (29) is configured to transmit short messages to the remote server (1) via a transaction server (2).

8. A transaction server (2) configured for use with the system of any one of claims 1 to 7, the transaction server (2) being connected with the remote server (1) and the short message service centre (4), said short message service centre (4) being configured to communicate with the remote server (1) via the transaction server.

9. A transaction server of claim 8 configured to communicate with the remote server (1) and the short message service centre (4), over a communications line.

10. A transaction server according to claim 9, wherein the communications line is an Internet connection.

11. A transaction server according to claim 8, wherein the transaction server (2) is a component of the short message service centre (4).

12. A transaction server (2) according to any one of claims 8 to 11, which comprises converting means (32,34,37) configured for:
converting short messages into a format in accordance with a communications protocol established on a communications line; and
converting the format in accordance with the communications protocol installed on the communications line to short messages.

13. A transaction server (2) according to claim 12, wherein the converting means comprises:
a message composing module (34);
a message analysis module (37) provided with means for detecting validity and nature of a message;
a transaction managing module (32) for accessing a database (33), a translation into a short message format being subsequently carried out by means of the message composing module (34).

14. A transaction server (2) according to any one of claims 8 to 13, further comprising at least one communications managing module (31) for enabling communications with at least remote server (1) respectively.

15. A transaction server (2) according to claim 14, wherein the transaction server (2) is provided with a plurality of communications managing modules (31) according to each type of remote server (1).

16. A transaction server (2) according to any one of claims 8 to 15, further comprising transmitter/receiver means (30) for communicating with the remote servers (1).

17. A transaction server (2) according to claim 14 or 15, wherein each communications managing module (31) is connected to a database (33) for verifying previously established security parameters and rejecting or accepting communications depending on a result of said verification.

18. A method of transmitting/receiving short messages between a mobile terminal (5) and a remote server (1), such that said mobile terminal is configured to communicate with a short message service centre (4) through a mobile telephony network (6) and said short message service centre (4) is in turn configured to communicate with the remote server (1), the method **characterised by**, when the mobile terminal is operating in a receiving mode:
translating any received short messages into messages having a direct interpretation format; and
displaying the direct interpretation format of a received short message in order to allow a user to interpret the received short message;
and when the mobile terminal is operating in a transmitting mode:
displaying at least one message option in the direct interpretation format in order to allow any of the displayed message options to be selected; and
translating any selected message option from the direct interpretation format into a short message, thereby allowing a user of the terminal to introduce and send short messages in an accessible and immediate way.

19. A method according to claim 18, wherein when the mobile terminal is operating in the receiving mode, the method further comprises:
detecting validity and nature of the received short message; and
providing a translation of a valid received short message into the direct interpretation format.

20. A method according to claim 18 or 19, wherein when the mobile terminal is operating in the transmitting mode:
upon selection of at least one displayed message option, accessing a database (28) to obtain data, the data corresponding to at least one selected message option from the direct interpretation format; and
composing a short message for transmission to the remote server (1) using the data to the short message service centre (4).

## Patentansprüche

1. System zum Senden / Empfangen von Kurznachrichten zwischen einem mobilen Endgerät (5) und einem abgesetzten Server (1), bei dem das mobile Endgerät (5) zumindest eine Benutzerschnittstelle (20, 27) und eine Mobiltelefon-Chipkarte umfasst und das mobile Endgerät (5) so konfiguriert ist, dass es über ein Mobiltelefonienetzwerk (6) mit einem Kurznachrichtenservicezentrum (4) kommuniziert, und das Kurznachrichtenservicezentrum wiederum so konfiguriert ist, dass es mit dem abgesetzten Server (1) kommuniziert, **dadurch gekennzeichnet, dass** das mobile Endgerät (5) Folgendes umfasst:
ein Übersetzungsmittel (23, 24, 26, 28) zum Übersetzen von empfangenen Kurznachrichten in Nachrichten mit einem Format für die direkte Interpretation,
ein Anzeigemittel für:
i) das Anzeigen des Formats für die direkte Interpretation einer empfangenen Kurznachricht, damit es einem Benutzer möglich ist, die empfangene Kurznachricht zu interpretieren,
ii) das Anzeigen mindestens einer Nachrichtenoption in dem Format für die direkte Interpretation,
ein Auswahlmittel (21, 22) zum Auswählen beliebiger der mindestens einen angezeigten Nachrichtenoptionen,
wobei das Übersetzungsmittel (25, 26, 28, 29) ferner für das Übersetzen einer beliebigen ausgewählten Nachrichtenoption aus dem Format für die direkte Interpretation in eine Kurznachricht konfiguriert ist, wodurch es für einen Benutzer des Endgeräts möglich ist, Kurznachrichten auf zugängliche und sofortige Weise einzusetzen und zu senden.

2. System nach Anspruch 1, bei dem das Übersetzungsmittel (23, 24, 26, 28) Folgendes umfasst:
ein Nachrichtenanalysemodul (24) mit einem Mittel zum Erkennen der Gültigkeit und Art der empfangenen Kurznachricht,
ein Transaktionsverwaltungsmodul (26) zum Empfangen und Analysieren eines Ergebnisses vom Analysemodul (24), das zudem so konfiguriert ist, dass es eine Übersetzung einer gültigen empfangenen Kurznachricht in das Format für die direkte Interpretation bereitstellt.

3. System nach Anspruch 2, bei dem das Anzeigemittel einen Bildschirm (21) des mobilen Endgerätes (5) umfasst, der über die Benutzerschnittstelle (20, 27) mit dem Transaktionsverwaltungsmodul (26) verbunden ist, damit das Format für die direkte Interpretation auf dem Bildschirm (21) angezeigt wird.

4. System nach einem der vorhergehenden Ansprüche, bei dem:
das Übersetzungsmittel (25, 26, 28, 29) ferner ein Kurznachrichtenverfassungsmodul (25) und ein Transaktionsverwaltungsmodul (26) umfasst,
das Auswahlmittel eine Tastatur (22) und einen Bildschirm (21) umfasst, wobei die Tastatur so konfiguriert ist, dass sie mindestens eine auf dem Bildschirm angezeigte Nachrichtenoption auswählt und dafür sorgt, dass diese zum Transaktionsverwaltungsmodul (26) gelangt, und
das Transaktionsverwaltungsmodul (26) so konfiguriert ist, dass es auf eine Datenbank (28) zugreift und der ausgewählten Nachrichtenoption entsprechend Daten zu dem Kurznachrichtenverfassungsmodul (25) sendet.

5. System nach Anspruch 4, bei dem:
das Übersetzungsmittel (25, 26, 28, 29) ferner ein Kurznachrichtenübermittlungsmodul (29) umfasst,
das Kurznachrichtenverfassungsmodul (25) so konfiguriert ist, dass es unter Verwendung der von dem Transaktionsverwaltungsmodul (26) gesendeten Daten die Kurznachricht verfasst, wobei es sich bei der Kurznachricht um eine Übersetzung mindestens einer ausgewählten Nachrichtenoption in dem Format für die direkte Interpretation handelt, und
das Kurznachrichtenübertragungsmodul (29) so konfiguriert ist, dass es die verfasste Kurznachricht zum Kurznachrichtenservicezentrum (4) überträgt.

6. System nach einem der vorhergehenden Ansprüche, bei dem das Übersetzungsmittel (24, 25, 26, 28) in der Mobiltelefon-Chipkarte bereitgestellt wird.

7. System nach einem der vorhergehenden Ansprüche, bei dem das Kurznachrichtenübertragungsmodul (29) so konfiguriert ist, dass es über einen Transaktionsserver (2) Kurznachrichten zu dem abgesetzten Server (1) überträgt.

8. Transaktionsserver (2), der für die Verwendung mit dem System nach einem der Ansprüche 1 bis 7 konfiguriert ist, wobei der Transaktionsserver (2) mit dem abgesetzten Server (1) und dem Kurznachrichtenservicezentrum (4) verbunden ist, wobei das Kurznachrichtenservicezentrum (4) so konfiguriert ist, dass es über den Transaktionsserver mit dem abgesetzten Server (1) kommuniziert.

9. Transaktionsserver nach Anspruch 8, der so konfiguriert ist, dass er über eine Kommunikationsleitung mit dem abgesetzten Server (1) und dem Kurznachrichtenservicezentrum (4) kommuniziert.

10. Transaktionsserver nach Anspruch 9, bei dem es sich bei der Kommunikationsleitung um eine Internet-Verbindung handelt.

11. Transaktionsserver nach Anspruch 8, wobei es sich bei dem Transaktionsserver (2) um eine Komponente des Kurznachrichtenservicezentrums (4) handelt.

12. Transaktionsserver (2) nach einem der Ansprüche 8 bis 11, der ein Umwandlungsmittel (32, 34, 37) umfasst, das für Folgendes konfiguriert ist:
Umwandeln von Kurznachrichten in ein Format gemäß einem in einer Kommunikationsleitung etablierten Kommunikationsprotokoll und
Umwandeln des Formats gemäß dem in der Kommunikationsleitung eingesetzten Kommunikationsprotokoll in Kurznachrichten.

13. Transaktionsserver (2) nach Anspruch 12, bei dem das Umwandlungsmittel Folgendes umfasst:
ein Nachrichtenverfassungsmodul (34),
ein Nachrichtenanalysemodul (37) mit einem Mittel zum Erkennen der Gültigkeit und Art einer Nachricht,
ein Transaktionsverwaltungsmodul (32) zum Zugreifen auf eine Datenbank (33), wobei danach mit Hilfe des Nachrichtenverfassungsmoduls (34) eine Übersetzung in ein Kurznachrichtenformat ausgeführt wird.

14. Transaktionsserver (2) nach einem der Ansprüche 8 bis 13, der ferner mindestens ein Kommunikationsverwaltungsmodul (31) zum Ermöglichen einer Kommunikation mit jeweils mindestens einem abgesetzten Server (1) umfasst.

15. Transaktionsserver (2) nach Anspruch 14, wobei der Transaktionsserver (2) jedem Typ abgesetztem Server (1) entsprechend mit mehreren Kommunikationsverwaltungsmodulen (31) ausgestattet ist.

16. Transaktionsserver (2) nach einem der Ansprüche 8 bis 15, der ferner ein Sender/Empfänger-Mittel (30) zum Kommunizieren mit den abgesetzten Servern (1) umfasst.

17. Transaktionsserver (2) nach Anspruch 14 oder 15, bei dem jedes Kommunikationsverwaltungsmodul (31) zum Überprüfen bereits etablierter Sicherheitsparameter und zum Ablehnen oder Annehmen von Kommunikation in Abhängigkeit von einem Ergebnis der Überprüfung mit einer Datenbank (33) verbunden ist.

18. Verfahren zum Übertragen / Empfangen von Kurznachrichten zwischen einem mobilen Endgerät (5) und einem abgesetzten Server (1), wobei das mobile Endgerät so konfiguriert ist, dass es über ein Mobiltelefonienetzwerk (6) mit einem Kurznachrichtenservicezentrum (4) kommuniziert, und das Kurznachrichtenservicezentrum (4) wiederum so konfiguriert ist, dass es mit dem abgesetzten Server (1) kommuniziert, wobei das Verfahren durch Folgendes gekennzeichnet ist, wenn das mobile Endgerät im Empfangsmodus betrieben wird:
Übersetzen von empfangenen Kurznachrichten in Nachrichten von einem Format für die direkte Interpretation und
Anzeigen des Formats für die direkte Interpretation einer empfangenen Kurznachricht, damit es einem Benutzer möglich ist, die
empfangene Kurznachricht zu interpretieren,
und wenn das mobile Endgerät in einem Sendemodus betrieben wird:
Anzeigen mindestens einer Nachrichtenoption im Format für die direkte Interpretation, um ein Auswählen der angezeigten Nachrichtenoptionen zu ermöglichen, und
Übersetzen einer beliebigen ausgewählten Nachrichtenoption aus dem Format für die direkte Interpretation in eine Kurznachricht, wodurch es einem Benutzer des Endgeräts möglich ist, Kurznachrichten auf zugängliche und sofortige Weise einzusetzen und zu senden.

19. Verfahren nach Anspruch 18, das, wenn das mobile Endgerät im Empfangsmodus betrieben wird, ferner Folgendes umfasst:
Erkennen der Gültigkeit und Art der empfangenen Kurznachricht und
Bereitstellen einer Übersetzung einer gültigen empfangenen Kurznachricht in das Format für die direkte Interpretation.

20. Verfahren nach Anspruch 18 oder 19, bei dem, wenn das mobile Endgerät im Sendemodus betrieben wird:
nach dem Auswählen mindestens einer angezeigten Nachrichtenoption auf eine Datenbank (28) zugegriffen wird, um Daten abzurufen, die mindestens einer ausgewählten Nachrichtenoption aus dem Format für die direkte Interpretation entsprechen, und
Verfassen einer Kurznachricht zum Senden zu dem abgesetzten Server (1) unter Verwendung der Daten für das Kurznachrichtenservicezentrum (4).

## Revendications

1. Système d'émission/de réception de messages courts entre un terminal mobile (5) et un serveur distant (1), dans lequel le terminal mobile (5) comprend au moins une interface utilisateur (20, 27), une carte à puce intelligente de téléphone mobile et ledit terminal mobile (5) est configuré de façon à communiquer avec un centre de service de messages courts (4) par l'intermédiaire d'un réseau de téléphonie mobile (6), et ledit centre de service de messages courts est, à son tour, configuré de façon à communiquer avec le serveur distant (1) ; **caractérisé en ce que** le terminal mobile (5) comporte :
des moyens de traduction (23, 24, 26, 28) destinés à traduire n'importe quel message court reçu en un message ayant un format d'interprétation directe ;
des moyens d'affichage pour :
i) afficher le format d'interprétation directe d'un message court reçu afin de permettre à un utilisateur d'interpréter le message court reçu ;
ii) afficher au moins une option de message dans le format d'interprétation directe ;
des moyens de sélection (21, 22) pour sélectionner n'importe quelle option de message affichée, à savoir au moins une option de message affichée ;
les moyens de traduction (25, 26, 28, 29) étant configurés en outre pour traduire n'importe quelle option de message sélectionnée à partir du format d'interprétation directe en un message court, ce qui permet ainsi à un utilisateur du terminal d'introduire et d'envoyer des messages courts suivant une manière accessible et immédiate.

2. Système selon la revendication 1, les moyens de traduction (23, 24, 26, 28) comprenant :
un module d'analyse de messages (24) pourvu de moyens destinés à détecter la validité et la nature du message court reçu ;
un module gestionnaire de transactions (26) destiné à recevoir et à analyser un résultat issu dudit module d'analyse (24), et étant configuré de façon à procurer une traduction d'un message court reçu valide dans le format d'interprétation directe.

3. Système selon la revendication 2, les moyens d'affichage comprenant un écran (21) du terminal mobile (5), ledit écran étant connecté au module gestionnaire de transactions (26) par l'intermédiaire de l'interface utilisateur (20, 27) afin de présenter le format d'interprétation directe sur l'écran (21).

4. Système selon l'une quelconque des revendications précédentes :
les moyens de traduction (25, 26, 28, 29) comprenant en outre un module de composition de messages courts (25), et un module gestionnaire de transactions (26) ;
les moyens de sélection comprenant un clavier (22) et un écran (21) de sorte que le clavier est configuré de façon à sélectionner au moins une option de message affichée sur l'écran, et à faire en sorte qu'elle atteigne ledit module gestionnaire de transactions (26) ; et
le module gestionnaire de transactions (26) étant configuré de façon à accéder à une base de données (28) et à envoyer des données correspondant à l'option de message sélectionnée vers le module de composition de messages courts (25).

5. Système selon la revendication 4 :
les moyens de traduction (25, 26, 28, 29) comprenant en outre un module de transmission de messages courts (29) ;
le module de composition de messages courts (25) étant configuré de façon à composer le message court grâce à l'utilisation des données envoyées à partir du module gestionnaire de transactions (26), le message court étant une traduction d'au moins une option de message sélectionnée dans le format d'interprétation directe ; et
le module de transmission de messages courts (29) étant configuré de façon à transmettre le message court composé vers le centre de service de messages courts (4).

6. Système selon l'une quelconque des revendications précédentes, les moyens de traduction (24, 25, 26, 28) étant prévus dans la carte à puce intelligente d'un téléphone mobile.

7. Système selon l'une quelconque des revendications précédentes, le module de transmission de messages courts (29) étant configuré de façon à transmettre des messages courts vers le serveur distant (1) par le biais d'un serveur de transactions (2).

8. Serveur de transactions (2) configuré en vue d'une utilisation avec le système selon l'une quelconque des revendications 1 à 7, le serveur de transactions (2) étant connecté au serveur distant (1) et au centre de service de messages courts (4), ledit centre de service de messages courts (4) étant configuré de façon à communiquer avec le serveur distant (1) par le biais du serveur de transactions.

9. Serveur de transactions selon la revendication 8, configuré de façon à communiquer avec le serveur distant (1) et le centre de service de messages courts (4) sur une ligne de communications.

10. Serveur de transactions selon la revendication 9, la ligne de communications étant une connexion Internet.

11. Serveur de transactions selon la revendication 8, le serveur de transactions (2) étant un composant du centre de service de messages courts (4).

12. Serveur de transactions (2) selon l'une quelconque des revendications 8 à 11, qui comporte des moyens de conversion (32, 34, 37) configurés pour :
convertir des messages courts en un format en conformité avec un protocole de communications établi sur une ligne de communications ; et
convertir le format en conformité avec le protocole de communications installé sur la ligne de communications vers des messages courts.

13. Serveur de transactions (2) selon la revendication 12, les moyens de conversion comprenant :
un module de composition de messages (34) ;
un module d'analyse de messages (37) pourvu de moyens destinés à détecter la validité et la nature d'un message ;
un module gestionnaire de transactions (32) destiné à accéder à une base de données (33), une traduction en un format de messages courts étant réalisée ultérieurement à l'aide du module de composition de messages (34).

14. Serveur de transactions (2) selon l'une quelconque des revendications 8 à 13, comprenant en outre au moins un module gestionnaire de communications (31) pour assurer des communications avec au moins un serveur distant (1) respectivement.

15. Serveur de transactions (2) selon la revendication 14, le serveur de transactions (2) étant pourvu d'une pluralité de modules gestionnaires de communications (31), en conformité avec chaque type de serveur distant (1).

16. Serveur de transactions (2) selon l'une quelconque des revendications 8 à 15, comprenant en outre des moyens émetteurs/récepteurs (30) destinés à communiquer avec les serveurs distants (1).

17. Serveur de transactions (2) selon la revendication 14 ou 15, chaque module gestionnaire de communications (31) étant connecté à une base de données (33) afin de vérifier des paramètres de sécurité ayant été établis antérieurement, et de rejeter ou d'accepter des communications en fonction d'un résultat issu de ladite vérification.

18. Procédé destiné à émettre/recevoir des messages courts entre un terminal mobile (5) et un serveur distant (1), de telle sorte que ledit terminal mobile est configuré de façon à communiquer avec un centre de service de messages courts (4) par l'intermédiaire d'un réseau de téléphonie mobile (6), et ledit centre de service de messages courts (4) est, à son tour, configuré de façon à communiquer avec le serveur distant (1), le procédé étant caractérisé, lorsque le terminal mobile est en train d'opérer dans un mode de réception, par les opérations consistant à :
traduire n'importe quel message court reçu en un message ayant un format d'interprétation directe ; et
afficher le format d'interprétation directe d'un message court reçu afin de
permettre à un utilisateur d'interpréter le message court reçu ;
et lorsque le terminal mobile est en train d'opérer dans un mode d'émission, par les opérations consistant à :
afficher au moins une option de message dans le format d'interprétation directe afin de permettre la sélection de l'une quelconque des options de message affichées ; et
traduire n'importe quelle option de message sélectionnée à partir du format d'interprétation directe en un message court, ce qui permet ainsi à un utilisateur du terminal d'introduire et d'envoyer des messages courts suivant une manière accessible et immédiate.

19. Procédé selon la revendication 18, lorsque le terminal mobile est en train d'opérer dans le mode de réception, le procédé comprenant en outre les opérations consistant à :
détecter la validité et la nature du message court reçu ; et
procurer une traduction d'un message court reçu valide dans le format d'interprétation directe.

20. Procédé selon la revendication 18 ou 19, lorsque le terminal mobile est en train d'opérer dans le mode d'émission :
lors de la sélection d'au moins une option de message affichée, l'opération consistant à accéder à une base de données (28) afin d'obtenir des données, les données correspondant à au moins une option de message sélectionnée à partir du format d'interprétation directe ; et
composer un message court en vue d'une transmission vers le serveur distant (1) grâce à l'utilisation des données se rendant au centre de service de messages courts (4).
